(19) Europäisches Patentamt
European Patent Office
Office européen des brevets

(11) **EP 3 647 161 A1**

(12) **EUROPEAN PATENT APPLICATION**

(43) Date of publication:
**06.05.2020 Bulletin 2020/19**

(51) Int Cl.:
**B62D 6/00** *(2006.01)* **B62D 5/04** *(2006.01)*

(21) Application number: **19205939.2**

(22) Date of filing: **29.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2018 JP 2018204101**

(71) Applicant: **JTEKT CORPORATION
Osaka-shi
Osaka 542-8502 (JP)**

(72) Inventor: **KODERA, Takashi
Osaka-shi, Osaka 542-8502 (JP)**

(74) Representative: **Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)**

(54) **STEERING CONTROL DEVICE**

(57) Provided is a steering control device capable of applying an appropriate steering reaction force when turning of steered wheels in at least one direction is restricted. A target reaction force torque calculation unit (71) includes a reaction force component calculation unit (91) that calculates a reaction force component (Fir), a target steering torque calculation unit (92) that calculates a target steering torque (Th*), a torque feedback control unit (93) that calculates a torque feedback component (Tfbt) by performing torque feedback control for making a steering torque (Th) follow the target steering torque (Th*), a target steering angle calculation unit (95) that calculates a target steering angle (θh*), and a steering angle feedback control unit (96) that calculates a steering angle feedback component (Tfbh) by performing steering angle feedback control for making a steering angle (θh) follow the target steering angle (θh*). The target reaction force torque calculation unit (71) calculates a target reaction force torque (Ts*) by adding the torque feedback component (Tfbt) and the steering angle feedback component (Tfbh). When an end reaction force (Fie) exceeds a threshold torque, the torque feedback component (Tfbt) is set to zero.

*FIG. 3*

**Description**

BACKGROUND OF THE INVENTION

1. Field of the Invention

The present invention relates to a steering control device.

2. Description of Related Art

A steer-by-wire steering system is a type of steering system in which power transmission is disconnected between a steering unit steered by the driver and a turning unit that turns steered wheels in accordance with steering by the driver. With this type of steering system, a road surface reaction force and so on received by steered wheels are not mechanically transmitted to a steering wheel. Therefore, some steering control devices that control this type of steering system are configured to calculate a target reaction force torque based on a force in the same direction as a steering torque input by the driver (steering force component) and a force in the opposite direction to the steering torque (reaction force component), and control the operation of a steering-side motor such that a steering reaction force based on the target reaction force torque is applied.

The steering reaction force that is applied to the steering wheel may be obtained by approximately simulating a steering reaction force received by the driver when steering a steering system such as an electric power steering system (EPS) in which an assist force for assisting the driver in steering is applied. For example, Japanese Unexamined Patent Application Publication No. 2017-165219 (JP 2017-165219 A) discloses a steering control device that calculates a steering force component by adding a steering torque and an additional torque for simulating an assist force corresponding to the steering torque, and calculates a reaction force component by adding an axial force applied to a rack shaft and an end reaction force that reduces the impact generated when so-called end abutment occurs, that is, when an end of the rack shaft (rack end) comes into contact with a rack housing. Further, the steering control device calculates a steering angle (target steering angle) in the case where a force obtained by subtracting the reaction force component from the steering force component is input to an ideal model (steering model) of a steering system. Then, to make the actual steering angle follow the target steering angle, the steering control device calculates a target reaction force torque through execution of angle feedback control, and controls the operation such that a steering-side motor outputs the target reaction force torque. Note that the end reaction force is applied when a target turning corresponding angle exceeds a steering angle threshold that is set in advance.

Assume that, with the steering control device of JP 2017-165219 A, the driver tries to perform further steering when an end reaction force is applied. In this case, the reaction force component rapidly increases due to addition of the end reaction force. Meanwhile, the steering force component also increases due to an increase in steering torque resulting from the further steering, and due to an increase in additional torque resulting from the increase in steering torque. Therefore, even when the reaction force component increases due to addition of the end reaction force, the target reaction force torque is prevented from increasing because of the increase in steering force component. This may result in failing to apply an appropriate steering reaction force.

This phenomenon occurs not only upon applying an end reaction force, but also upon applying a restriction reaction force for restricting steering for turning the steered wheels in at least one direction when turning of the steered wheels in the at least one direction is restricted, such as when a steered wheel is turned and brought into contact with an obstacle. Moreover, this phenomenon occurs not only to steering control devices for controlling steer-by-wire steering systems, but also to steering control devices for controlling EPSs (for example, Japanese Unexamined Patent Application Publication No. 2014-943), upon applying a restriction reaction force to restrict turning of steered wheels.

SUMMARY OF THE INVENTION

An object of the present invention is to provide a steering control device capable of applying an appropriate steering reaction force when turning of steered wheels in at least one direction is restricted.

According to an aspect of the present invention, there is provided a steering control device that controls a steering system in which power transmission is disconnected between a steering unit and a turning unit that turns steered wheels in accordance with steering input to the steering unit, the steering control device controlling an operation of a steering-side motor provided in the steering unit, the steering control device including:

a target reaction force torque calculation unit that calculates a target reaction force torque as a target value of a steering reaction force, the steering reaction force being a force against the steering input to the steering unit and being generated by the steering-side motor; wherein:

the target reaction force torque calculation unit includes a target steering torque calculation unit that calculates a target steering torque as a target value of a steering torque to be input to the steering unit, a torque feedback control unit that calculates a torque feedback component by performing torque feedback control based on the steering torque and the target steering torque, a reaction force component calculation unit that calculates a reaction force component, the reaction force component being a force applied in a direction opposite to the steering torque, a target steering angle calculation unit that calculates a target steering angle as a target value of a steering angle of a steering wheel coupled to the steering unit, based on the steering torque, the torque feedback component, and the reaction force component, and a steering angle feedback control unit that calculates a steering angle feedback component by performing steering angle feedback control based on the steering angle and the target steering angle; the target reaction force torque calculation unit calculates the target reaction force torque as the target value of the steering reaction force, based on the steering angle feedback component; the reaction force component calculation unit includes a restriction reaction force calculation unit that calculates, when turning of the steered wheels in at least one direction is restricted, a restriction reaction force for restricting steering for turning the steered wheels in the at least one direction; and when turning of the steered wheels in at least one direction is restricted, the torque feedback control unit makes an absolute value of the torque feedback component smaller than when turning of the steered wheels is not restricted.

According to the above configuration, since the target reaction force torque contains the steering angle feedback component, a steering reaction force is applied to the steering wheel such that the steering angle becomes equal to the target steering angle. Moreover, when turning of the steered wheels in at least one direction is restricted and the restriction reaction force is contained in the reaction force component on which the target steering angle is based, the steering angle corresponding to the steered angle of the steered wheels restricted by the restriction reaction force is set as the target steering angle. Further, according to the above configuration, when turning of the steered wheels in at least one direction is restricted, the torque feedback component has a smaller absolute value than when turning of the steered wheels is not restricted, so that the contribution of the torque feedback component to the target reaction force torque is reduced. Accordingly, it is possible to apply an appropriate steering reaction force when turning of the steered wheels in at least one direction is restricted.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic configuration diagram of a steering system according to a first embodiment;
FIG. 2 is a block diagram of a steering control device according to the first embodiment;
FIG. 3 is a block diagram of a target reaction force torque calculation unit according to the first embodiment;
FIG. 4 is a block diagram of a reaction force component calculation unit according to the first embodiment;
FIG. 5 is a block diagram of a target reaction force torque calculation unit according to the second embodiment;
FIG. 6 is a schematic configuration diagram of a steering system according to a third embodiment;
FIG. 7 is a block diagram of a target assist torque calculation unit according to the third embodiment; and
FIG. 8 is a schematic configuration diagram of a steering system according to a modification.

DETAILED DESCRIPTION OF EMBODIMENTS

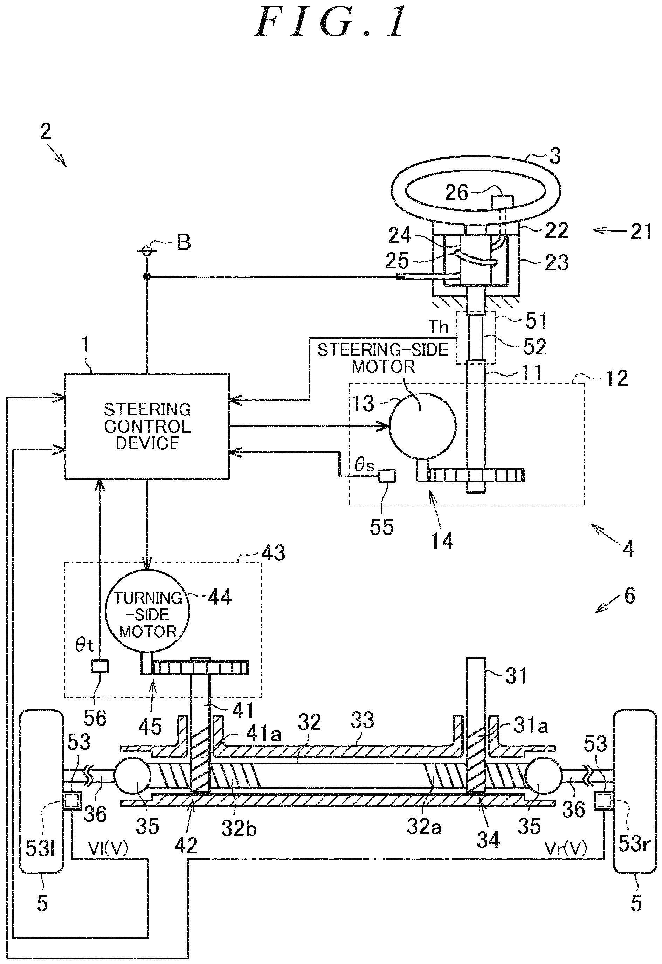

Hereinafter, a steering control device according to a first embodiment will be described with reference to the drawings. As illustrated in FIG. 1, a steering system 2 controlled by a steering control device 1 of the present embodiment is configured as a steer-by-wire steering system. The steering system 2 includes a steering unit 4 steered via a steering wheel 3 by the driver, and a turning unit 6 that turns steered wheels 5 in accordance with steering of the steering unit 4 by the driver.

The steering unit 4 includes a steering shaft 11 to which the steering wheel 3 is fixed, and a steering-side actuator 12 capable of applying a steering reaction force to the steering shaft 11. The steering-side actuator 12 includes a steering-side motor 13 serving as a drive source, and a steering-side reducer 14 that transmits a rotation of the steering-side motor 13 to the steering shaft 11 at a reduced speed. The steering-side motor 13 of the present embodiment is, for example, a three-phase brushless motor.

A spiral cable device 21 is coupled to the steering wheel 3. The spiral cable device 21 includes a first housing 22 fixed to the steering wheel 3. The spiral cable device 21 further includes a second housing 23 fixed to a vehicle body, a tubular member 24 fixed to the second housing 23 and housed in a space defined by the first and second housings 22 and 23, and a spiral cable 25 wound around the tubular member 24. The steering shaft 11 is inserted through the tubular member 24. The spiral cable 25 is an electric wire connecting a horn 26 fixed to the steering wheel 3 and an in-vehicle battery B and so on fixed to the vehicle body. The length of the spiral cable 25 is sufficiently longer than a distance between the horn 26 and the in-vehicle battery B so as to supply electric power to the horn 26 while allowing the steering wheel 3 to rotate within the range corresponding to that length.

The turning unit 6 includes a first pinion shaft 31 serving as a rotary shaft whose rotation angle can be converted into a steered angle of the steered wheels 5, a rack shaft 32 serving as a steered shaft coupled to the first pinion shaft 31, a rack housing 33 reciprocally accommodating the rack shaft 32, and a first rack-and-pinion mechanism 34 that converts a rotation of the first pinion shaft 31 into a reciprocating motion of the rack shaft 32. The first pinion shaft 31 and the rack shaft 32 are arranged at a prescribed crossing angle. First pinion teeth 31a formed on the first pinion shaft 31 and first rack teeth 32a formed on the rack shaft 32 mesh with each other, thereby forming the first rack-and-pinion mechanism 34. Note that the rack shaft 32 is reciprocally supported at a first axial end thereof by the first rack-and-pinion mechanism 34. A tie rod 36 is coupled to each end of the rack shaft 32 via a rack end 35 including a ball joint. A distal end of the tie rod 36 is coupled to a knuckle (not illustrated) to which the steered wheel 5 is attached.

The turning unit 6 further includes a second pinion shaft 41, a second rack-and-pinion mechanism 42 that converts a rotation of the second pinion shaft 41 into a reciprocating motion of the rack shaft 32, and a turning-side actuator 43 that applies a turning force for turning the steered wheels 5 to the rack shaft 32 via the second pinion shaft 41. The turning-side actuator 43 includes a turning-side motor 44 serving as a drive source, and a turning-side reducer 45 that transmits a rotation of the turning-side motor 44 to the second pinion shaft 41 at a reduced speed. The second pinion shaft 41 and the rack shaft 32 are arranged at a prescribed crossing angle. Second pinion teeth 41a formed on the second pinion shaft 41 and second rack teeth 32b formed on the rack shaft 32 mesh with each other, thereby forming the second rack-and-pinion mechanism 42. Note that the rack shaft 32 is reciprocally supported at a second axial end thereof by the second rack-and-pinion mechanism 42. The turning-side motor 44 of the present embodiment is, for example, a three-phase brushless motor.

In the steering system 2 having the configuration described above, the second pinion shaft 41 is rotated by the turning-side actuator 43 in accordance with a steering operation by the driver. The rotation is converted into an axial movement of the rack shaft 32 by the second rack-and-pinion mechanism 42, so that the steered angle of the steered wheels 5 is changed. Meanwhile, the steering-side actuator 12 applies a steering reaction force against steering by the driver to the steering wheel 3.

Hereinafter, the electrical configuration of the present embodiment will be described. The steering control device 1 is connected to the steering-side actuator 12 (steering-side motor 13) and the turning-side actuator 43 (turning-side motor 44), and controls the operations of these elements. Note that the steering control device 1 includes a central processing unit (CPU) and a memory (neither illustrated), and executes a program at prescribed calculation intervals. In this way, various types of control operations are executed.

A torque sensor 51 that detects a steering torque Th applied to the steering shaft 11 is connected to the steering control device 1. The torque sensor 51 is disposed on the steering wheel 3 side on the steering shaft 11 with respect to a portion connected to the steering-side actuator 12 (steering-side reducer 14), and detects the steering torque Th based on a torsion amount of a torsion bar 52. A right front wheel sensor 53r and a left front wheel sensor 53l are provided on a hub unit 53 that rotatably supports the steered wheels 5 via a drive shaft (not illustrated). The right front wheel sensor 53r and the left front wheel sensor 53l are connected to the steering control device 1. The right front wheel sensor 53r and the left front wheel sensor 53l detect wheel speeds Vr and Vl of the respective steered wheels 5. The steering control device 1 of the present embodiment detects an average value of the wheel speeds Vr and Vl as a vehicle speed V. A steering-side rotation sensor 55 and a turning-side rotation sensor 56 are also connected to the steering control device 1. The steering-side rotation sensor 55 detects, as a detection value indicating a steering amount of the steering unit 4, a rotation angle θs of the steering-side motor 13 in terms of a relative angle within 360°. The turning-side rotation sensor 56 detects, as a detection value indicating a turning amount of the turning unit 6, a rotation angle θt of the turning-side motor 44. The detected steering torque Th and rotation angles θs and θt take a positive value when steering is performed in a first direction (right in the present embodiment), and take a negative value when steering is performed in a second direction (left in the present embodiment). The steering control device 1 controls operations of the steering-side motor 13 and the turning-side motor 44 based on these various state quantities.

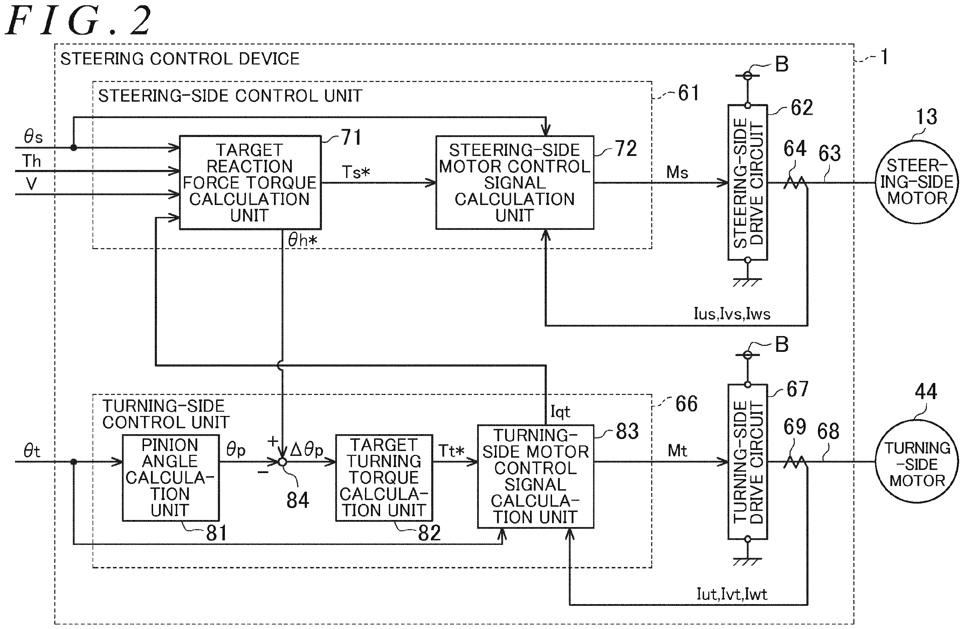

Hereinafter, the configuration of the steering control device 1 will be described in detail. As illustrated in FIG. 2, the steering control device 1 includes a steering-side control unit 61 that outputs a steering-side motor control signal Ms, and a steering-side drive circuit 62 that supplies drive power to the steering-side motor 13 based on the steering-side motor control signal Ms. Current sensors 64 are connected to the steering-side control unit 61. The current sensors 64 detect phase current values Ius, Ivs, and Iws of the steering-side motor 13 flowing through connection lines 63 between the steering-side drive circuit 62 and motor coils of respective phases of the steering-side motor 13. In FIG. 2, the connection lines 63 of the respective phases and the current sensors 64 of the respective phases are collectively depicted as a single connection line 63 and a single current sensor 64, respectively, for the sake of convenience.

The steering control device 1 includes a turning-side control unit 66 that outputs a turning-side motor control signal Mt, and a turning-side drive circuit 67 that supplies drive power to the turning-side motor 44 based on the turning-side motor control signal Mt. Current sensors 69 are connected to the turning-side control unit 66. The current sensors 69 detect phase current values Iut, Ivt, and Iwt of the turning-side motor 44 flowing through connection lines 68 between the turning-side drive circuit 67 and motor coils of respective phases of the turning-side motor 44. In FIG. 2, the connection lines 68 of the respective phases and the current sensors 69 of the respective phases are collectively depicted as a single connection line 68 and a single current sensor 69, respectively, for the sake of convenience. Each of the steering-side drive circuit 62 and the turning-side drive circuit 67 of the present embodiment is a known PWM inverter including a plurality of switching elements (such as FETs). Each of the steering-side motor control signal Ms and the turning-side motor control signal Mt is a gate ON/OFF signal that determines the ON/OFF state of each switching element.

The steering-side control unit 61 and the turning-side control unit 66 output the steering-side motor control signal Ms and the turning-side motor control signal Mt to the steering-side drive circuit 62 and the turning-side drive circuit 67, respectively, thereby supplying drive power from the in-vehicle battery B to the steering-side motor 13 and the turning-side motor 44. In this manner, the steering-side control unit 61 and the turning-side control unit 66 control the operations of the steering-side motor 13 and the turning-side motor 44, respectively.

First, the configuration of the steering-side control unit 61 will be described.

The steering-side control unit 61 executes calculation processes indicated by respective control blocks described below at prescribed calculation intervals so as to generate the steering-side motor control signal Ms. The steering-side control unit 61 receives the vehicle speed V, the steering torque Th, the rotation angle $\theta s$, and the phase current values Ius, Ivs, and Iws described above, and also receives a q-axis current value Iqt as a drive current of the turning-side motor 44. Then, the steering-side control unit 61 generates and outputs the steering-side motor control signal Ms based on these state quantities.

Specifically, the steering-side control unit 61 includes a target reaction force torque calculation unit 71 that calculates a target reaction force torque Ts* as the target value of the steering reaction force, and a steering-side motor control signal calculation unit 72 that outputs the steering-side motor control signal Ms.

The target reaction force torque calculation unit 71 receives the vehicle speed V, the steering torque Th, the rotation angle $\theta s$, and the q-axis current value Iqt. The target reaction force torque calculation unit 71 calculates the target reaction force torque Ts* based on these state quantities as will be described below, and outputs the target reaction force torque Ts* to the steering-side motor control signal calculation unit 72. The target reaction force torque calculation unit 71 also outputs, to the turning-side control unit 66, a target steering angle $\theta h*$ as the target value of a steering angle $\theta h$ of the steering wheel 3 that is obtained in the course of calculating the target reaction force torque Ts*.

The steering-side motor control signal calculation unit 72 receives the rotation angle $\theta s$ and the phase current values Ius, Ivs, and Iws, in addition to the target reaction force torque Ts*. The steering-side motor control signal calculation unit 72 of the present embodiment calculates a q-axis target current value Iqs* on the q-axis in the dq coordinate system, based on the target reaction force torque Ts*. Target current values Ids* and Iqs* respectively indicate a target current value on the d-axis and a target current value on the q-axis in the dq coordinate system. The steering-side motor control signal calculation unit 72 calculates the q-axis target current value Iqs* having an absolute value that increases as the absolute value of the target reaction force torque Ts* increases. Note that in the present embodiment, a d-axis target current value Ids* on the d-axis is basically set to zero. Then, the steering-side motor control signal calculation unit 72 performs current feedback control in the dq coordinate system, thereby generating the steering-side motor control signal Ms that is output to the steering-side drive circuit 62.

Specifically, the steering-side motor control signal calculation unit 72 calculates a d-axis current value Ids and a q-axis current value Iqs that are the actual current values of the steering-side motor 13 in the dq coordinate system, by mapping the phase current values Ius, Ivs, and Iws onto the dq coordinates based on the rotation angle $\theta s$. Then, to make the d-axis current value Ids follow the d-axis target current value Ids*, and to make the q-axis current value Iqs follow the q-axis target current value Iqs*, the steering-side motor control signal calculation unit 72 calculates a target voltage value based on the current deviations on the d-axis and q-axis, and generates the steering-side motor control signal Ms having a duty ratio based on the target voltage value.

The thus calculated steering-side motor control signal Ms is output to the steering-side drive circuit 62. Thus, a drive power corresponding to the steering-side motor control signal Ms is supplied from the steering-side drive circuit 62 to the steering-side motor 13. Then, the steering-side motor 13 applies a steering reaction force based on the target reaction force torque Ts* to the steering wheel 3.

In the following, the turning-side control unit 66 will be described.

The turning-side control unit 66 executes calculation processes indicated by respective control blocks described below at prescribed calculation intervals so as to generate the turning-side motor control signal Mt. The turning-side control unit 66 receives the rotation angle $\theta t$, the target steering angle $\theta h*$, and the phase current values Iut, Ivt, and Iwt of the turning-side motor 44 described above. Then, the turning-side control unit 66 generates and outputs the turning-side motor control signal Mt based on these state quantities.

Specifically, the turning-side control unit 66 includes a pinion angle calculation unit 81 that calculates the pinion angle $\theta p$ as a turning corresponding angle representing a rotation angle of the first pinion shaft 31. The turning-side control unit 66 further includes a target turning torque calculation unit 82 that calculates a target turning torque Tt* as the target value of the turning force, and a turning-side motor control signal calculation unit 83 that outputs the turning-side motor control signal Mt. In the steering system 2 of the present embodiment, a steering angle ratio, which is a ratio between the steering angle $\theta h$ and the pinion angle $\theta p$, is set to be constant, and the target turning corresponding angle representing the target value of the pinion angle θp is equal to the target steering angle θh*.

The pinion angle calculation unit 81 receives the rotation angle θt of the turning-side motor 44. The pinion angle calculation unit 81 converts the received rotation angle θt into an absolute angle in the range up to and exceeding 360° by, for example, counting the number of rotations of the turning-side motor 44 from a neutral position for the vehicle to travel straight ahead. Then, the pinion angle calculation unit 81 calculates the pinion angle θp, by multiplying the rotation angle converted into an absolute angle by a conversion factor Kt based on a rotational speed ratio of the turning-side reducer 45 and a rotational speed ratio of the first and second rack-and-pinion mechanisms 34 and 42. That is, the pinion angle θp corresponds to the steering angle θh of the steering wheel 3 on the assumption that the first pinion shaft 31 is coupled to the steering shaft 11. The thus calculated pinion angle θp is output to a subtractor 84 and the target reaction force torque calculation unit 71. The subtractor 84 receives the target steering angle θh* (target turning corresponding angle), in addition to the pinion angle θp.

The target turning torque calculation unit 82 receives an angle deviation Δθp calculated by subtracting the pinion angle θp from the target steering angle θh* (target turning corresponding angle) in the subtractor 84. Then, the target turning torque calculation unit 82 calculates the target turning torque Tt* representing the target value of the turning force that is applied by the turning-side motor 44, as a control amount for making the pinion angle θp follow the target steering angle θh* (for performing feedback control), based on the angle deviation Δθp. Specifically, the target turning torque calculation unit 82 calculates, as the target turning torque Tt*, the sum of the output values of a proportional element, an integral element, and a differential element to which the angle deviation Δθp is input.

The turning-side motor control signal calculation unit 83 receives the rotation angle θt and the phase current values Iut, Ivt, and Iwt, in addition to the target turning torque Tt*. The turning-side motor control signal calculation unit 83 calculates a q-axis target current value Iqt* on the q-axis in the dq coordinate system, based on the target turning torque Tt*.

The turning-side motor control signal calculation unit 83 calculates the q-axis target current value Iqt* having an absolute value that increases as the absolute value of the angle deviation Δθp increases. Note that in the present embodiment, a d-axis target current value Idt* on the d-axis is basically set to zero. Then, similar to the steering-side motor control signal calculation unit 72, the turning-side motor control signal calculation unit 83 performs current feedback control in the dq coordinate system, thereby generating the turning-side motor control signal Mt that is output to the turning-side drive circuit 67. Note that the q-axis current value Iqt calculated in the course of generating the turning-side motor control signal Mt is output to the target reaction force torque calculation unit 71.

The thus calculated turning-side motor control signal Mt is output to the turning-side drive circuit 67. Thus, drive power corresponding to the turning-side motor control signal Mt is supplied from the turning-side drive circuit 67 to the turning-side motor 44. Then, the turning-side motor 44 applies a turning force based on the target turning torque Tt* to the steered wheels 5.

In the following, the target reaction force torque calculation unit 71 will be described.

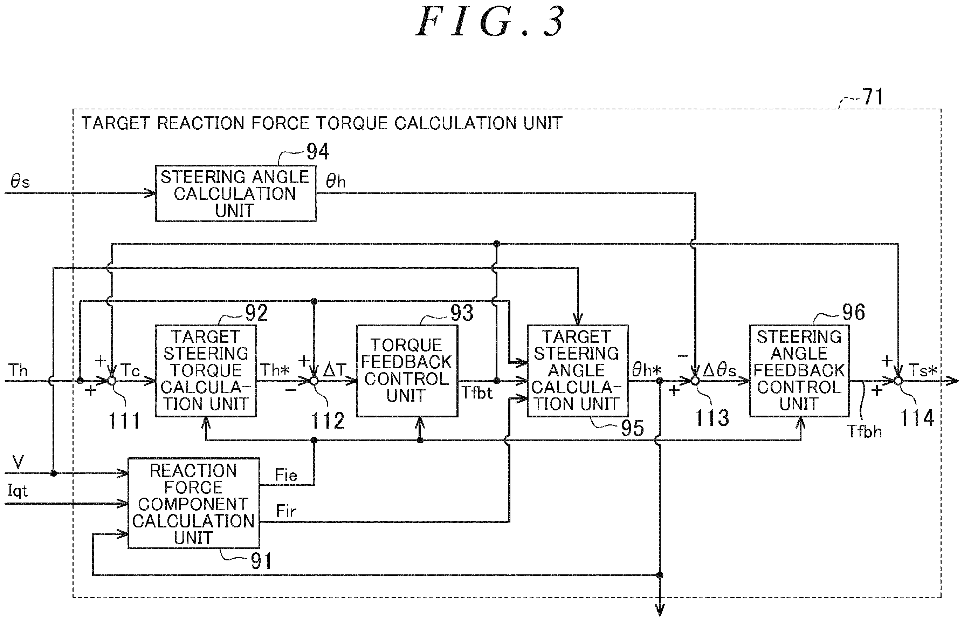

As illustrated in FIG. 3, the target reaction force torque calculation unit 71 includes a reaction force component calculation unit 91 that calculates a reaction force component Fir as a force against rotation of the steering wheel 3. Here, the reaction force component Fir is a force applied to the steering system 2 in a direction opposite to the steering torque Th. The target reaction force torque calculation unit 71 further includes a target steering torque calculation unit 92 that calculates a target steering torque Th* as the target value of the steering torque Th to be input to the steering unit 4, and a torque feedback control unit 93 that calculates a torque feedback component Tfbt by performing a torque feedback calculation. The target reaction force torque calculation unit 71 further includes a steering angle calculation unit 94 that calculates the steering angle θh of the steering wheel 3, and a target steering angle calculation unit 95 that calculates the target steering angle θh* as the target value of the steering angle θh. The target reaction force torque calculation unit 71 further includes a steering angle feedback control unit 96 that calculates a steering angle feedback component Tfbh by performing a steering angle feedback calculation.

Specifically, the reaction force component calculation unit 91 receives the vehicle speed V, the q-axis current value Iqt, and the target steering angle θh*. The reaction force component calculation unit 91 calculates the reaction force component Fir as a force against a steering operation based on these state quantities.

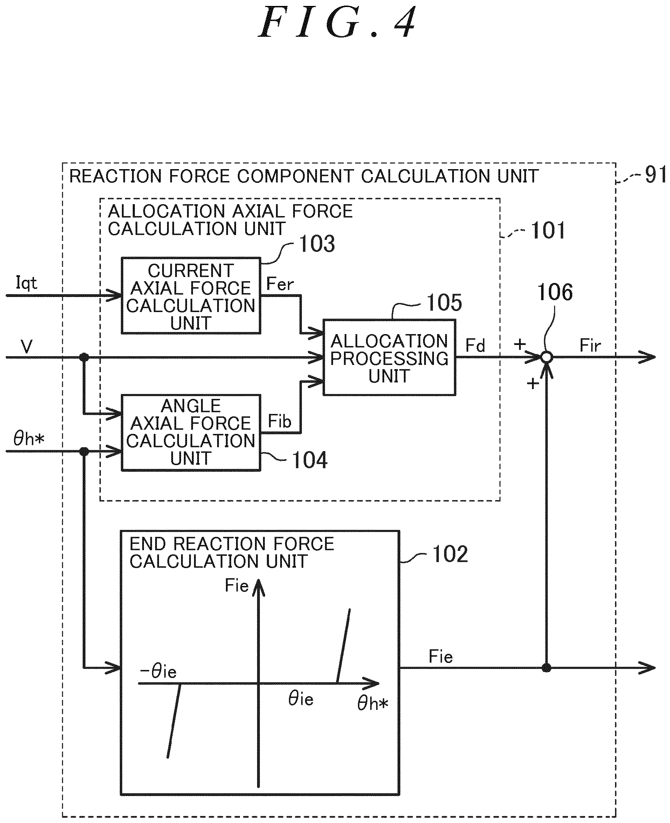

As illustrated in FIG. 4, the reaction force component calculation unit 91 includes an allocation axial force calculation unit 101 serving as an axial force calculation unit that calculates an allocation axial force Fd as an axial force, and an end reaction force calculation unit 102 serving as a restriction reaction force calculation unit that calculates an end reaction force Fie as a restriction reaction force. The reaction force component calculation unit 91 calculates the reaction force component Fir based on the allocation axial force Fd and the end reaction force Fie.

The allocation axial force calculation unit 101 includes a current axial force calculation unit 103 that calculate a current axial force (road surface axial force) Fer, and an angle axial force calculation unit 104 that calculates an angle axial force (ideal axial force) Fib. Note that the current axial force Fer and the angle axial force Fib are calculated in the torque dimension (N . m). The allocation axial force calculation unit 101 includes an allocation processing unit 105 that calculates the allocation axial force Fd as an allocation axial force, by allocating the angle axial force Fib and the current axial force Fer at a prescribed proportion such that the axial force applied from the road surface to the steered wheels 5 (road surface information transmitted from the road surface) is reflected.

The current axial force calculation unit 103 receives the q-axis current value Iqt. The current axial force calculation unit 103 calculates the current axial force Fer to which the road surface information is reflected, based on the q-axis current value Iqt. The current axial force Fer is an estimated value of the axial force applied to the steered wheels 5 (transmitted force that is transmitted to the steered wheels 5). Specifically, the current axial force calculation unit 103 calculates the current axial force Fer such that the absolute value of the current axial force Fer increases as the absolute value of the q-axis current value Iqt increases, on the assumption that the torque applied to the rack shaft 32 from the turning-side motor 44 balances the torque corresponding to the force applied from the road surface to the steered wheels 5. The thus calculated current axial force Fer is output to the allocation processing unit 105.

The angle axial force calculation unit 104 receives the target steering angle θh* and the vehicle speed V. The angle axial force calculation unit 104 calculates the angle axial force Fib to which the road surface information is not reflected, based on the target steering angle θh*. The angle axial force Fib is an ideal value of the axial force applied to the steered wheels 5 (transmitted force that is transmitted to the steered wheels 5). Specifically, the angle axial force calculation unit 104 calculates the angle axial force Fib such that the absolute value of the angle axial force Fib increases as the absolute value of the target steering angle θh* increases. Further, the angle axial force calculation unit 104 calculates the angle axial force Fib such that the absolute value of the angle axial force Fib increases as the vehicle speed V increases. The thus calculated angle axial force Fib is output to the allocation processing unit 105.

The allocation processing unit 105 receives the current axial force Fer and the angle axial force Fib. In the allocation processing unit 105, a current allocation gain indicating an allocation ratio of the current axial force Fer, and an angle allocation gain indicating an allocation ratio of the angle axial force Fib are set in advance through experiments. The current allocation gain and the angle allocation gain are variably set in accordance with the vehicle speed V. Then, the allocation processing unit 105 calculates the allocation axial force Fd, by adding together a value obtained by multiplying the angle axial force Fib by the angle allocation gain and a value obtained by multiplying the current axial force Fer by the current allocation gain. That is, the allocation axial force calculation unit 101 of the present embodiment obtains two axial forces, namely, the current axial force Fer and the angle axial force Fib, and calculates the allocation axial force Fd based on these two axial forces. The thus calculated allocation axial force Fd is output to an adder 106.

The end reaction force calculation unit 102 receives the target steering angle θh* (target turning corresponding angle). The end reaction force calculation unit 102 includes a map defining the relationship between the target steering angle θh* and the end reaction force Fie, and calculates the end reaction force Fie corresponding to the target steering angle θh* by referring to the map. A threshold angle θie is set in the map. Thus, when the absolute value of the target steering angle θh* is less than or equal to the threshold angle θie, the end reaction force Fie is calculated to be zero. On the other hand, when the absolute value of the target steering angle θh* is greater than the threshold angle θie, the end reaction force Fie is calculated to be greater than zero. The thus calculated end reaction force Fie is output to the adder 106, the target steering torque calculation unit 92, the torque feedback control unit 93, and the steering angle feedback control unit 96 (see FIG. 3). Note that the end reaction force Fie is set to have an absolute value that is so large that further steering cannot be performed by human power when the target steering angle θh* increases to a certain level over the threshold angle θie. That is, in the present embodiment, a situation where the target steering angle θh* exceeds the threshold angle θie is one of the situations where turning of the steered wheels 5 in at least one direction is restricted.

The threshold angle θie is set to the value of the pinion angle θp in a virtual rack end position located on the neutral-position side with respect to the mechanical rack end position where the axial movement of the rack shaft 32 is restricted due to contact of the rack end 35 with the rack housing 33. Also, the threshold angle θie (turning corresponding angle θp in the virtual rack end position) is set to be on the neutral-position side with respect to the steering angle θh of the steering wheel 3 in the steering end position defined by the maximum allowable limit by the spiral cable device 21 in the relationship with the mechanical structure of the steering unit 4 on the assumption that the steering unit 4 is coupled to the turning unit 6. That is, in the steering system 2 of the present embodiment, the virtual rack end position is set as the steering angle limit position of the turning unit 6, and the steering end position is set as the steering angle limit position of the steering unit 4. Assuming that the first pinion shaft 31 is coupled to the steering shaft 11, the turning unit 6 (steered wheels 5) reaches the steering angle limit position first. Further, the threshold angle θie corresponds to a steering angle threshold specified for the steering system 2.

Then, the reaction force component calculation unit 91 calculates, as the reaction force component Fir, a value obtained by adding the end reaction force Fie to the allocation axial force Fd in the adder 106. The thus calculated reaction force component Fir is output to the target steering torque calculation unit 92 (see FIG. 3).

As illustrated in FIG. 3, the target steering torque calculation unit 92 receives a drive torque Tc obtained by adding the torque feedback component Tfbt to the steering torque Th in an adder 111, and the end reaction force Fie. The target steering torque calculation unit 92 calculates the target steering torque Th* having an absolute value that increases as the absolute value of the drive torque Tc increases. Further, when the end reaction force Fie is greater than a threshold torque Tth, the target steering torque calculation unit 92 calculates the target steering torque Th* such that the absolute value of the target steering torque Th* with respect to the absolute value of the drive torque Tc becomes greater or smaller than when the end reaction force Fie is less than or equal to the threshold torque Tth. The threshold torque Tth is a value indicating that the target steering angle θh* exceeds the threshold angle θie, that is, the end reaction force Fie is output to restrict turning of the steered wheels 5, and is set to a value greater than zero. That is, when turning of the steered wheels 5 in at least one direction is restricted, the target steering torque calculation unit 92 calculates the target steering torque Th* such that the absolute value of the target steering torque Th* with respect to the absolute value of the drive torque Tc becomes greater or smaller than when turning of the steered wheels 5 is not restricted.

The torque feedback control unit 93 receives a torque deviation ΔT calculated by subtracting the target steering torque Th* from the steering torque Th in a subtractor 112, and the end reaction force Fie. Then, the torque feedback control unit 93 calculates the torque feedback component Tfbt as a control amount for making the steering torque Th follow the target steering torque Th* (for performing feedback control), based on the torque deviation ΔT.

Specifically, the torque feedback control unit 93 calculates, as the torque feedback component Tfbt, the sum of the output values of a proportional element obtained by multiplying the torque deviation ΔT by a proportional gain Gpt, an integral element obtained by multiplying the torque deviation ΔT by an integral gain Git, and a differential element obtained by multiplying the torque deviation ΔT by a differential gain Gdt. When the end reaction force Fie is greater than the threshold torque Tth, the torque feedback control unit 93 calculates, as the torque feedback component Tfbt, the sum of a proportional element, an integral element, and a differential element obtained by using the proportional gain Gpt, the integral gain Git, and the differential gain Gdt, each having a smaller value than when the end reaction force Fie is less than or equal to the threshold torque Tth. That is, when turning of the steered wheels 5 in at least one direction is restricted, the torque feedback control unit 93 calculates the torque feedback component Tfbt such that the torque feedback component Tfbt has a smaller absolute value than when turning of the steered wheels 5 is not restricted. Note that both the cases where the end reaction force Fie is greater than the threshold torque Tth and where the end reaction force Fie is less than or equal to the threshold torque Tth, each of the proportional gain Gpt, the integral gain Git, and the differential gain Gdt is set to a value greater than zero. The thus calculated torque feedback component Tfbt is output to the adders 111 and 114 and the target steering angle calculation unit 95.

The steering angle calculation unit 94 receives the rotation angle θs of the steering-side motor 13. The steering angle calculation unit 94 converts the received rotation angle θs into an absolute angle by, for example, counting the number of rotations of the steering-side motor 13 from a steering neutral position. Then, the steering angle calculation unit 94 calculates the steering angle θh, by multiplying the rotation angle converted into an absolute angle by a conversion factor Ks based on a rotational speed ratio of the steering-side reducer 14. The thus calculated steering angle θh is output to a subtractor 113.

The target steering angle calculation unit 95 receives the steering torque Th, the torque feedback component Tfbt, the reaction force component Fir, and the vehicle speed V. The target steering angle calculation unit 95 calculates, as an input torque Tin* (= Th + Tfbt - Fir), a value obtained by subtracting the reaction force component Fir from a value obtained by adding the torque feedback component Tfbt to the steering torque Th. Then, the target steering angle calculation unit 95 calculates the target steering angle θh*, using the following model (steering model) formula (1) that associates the input torque Tin* and the target steering angle θh* with each other.

$$Tin* = C \cdot θh*' + J \cdot θh*'' \qquad (1)$$

This model formula is an expression that defines the relationship between the torque and rotation angle of a rotary shaft that rotates with rotation of the steering wheel 3 in a steering system in which the steering wheel 3 (steering unit 4) is mechanically coupled to the steered wheels 5 (turning unit 6). This model formula is expressed using a viscosity coefficient C representing a modeled friction in the steering system 2 and an inertia coefficient J representing a modeled inertial in the steering system 2. The viscosity coefficient C and the inertia coefficient J are variably set according to the vehicle speed V. The target steering angle θh* calculated using the model formula is output to the reaction force component calculation unit 91, the subtractor 113, and the turning-side control unit 66.

The steering angle feedback control unit 96 receives an angle deviation Δθh obtained by subtracting the steering angle θh from the target steering angle θh* in the subtractor 113, and the end reaction force Fie.

Then, the steering angle feedback control unit 96 calculates the steering angle feedback component Tfbh as a control amount for making the steering angle θh follow the target steering angle θh* (for performing feedback control), based on the angle deviation Δθh.

Specifically, the steering angle feedback control unit 96 calculates, as the steering angle feedback component Tfbh, the sum of the output values of a proportional element obtained by multiplying the angle deviation Δθh by a proportional gain Gph, an integral element obtained by multiplying the angle deviation Δθh by an integral gain Gih, and a differential element obtained by multiplying the angle deviation Δθh by a differential gain Gdh. When the end reaction force Fie is greater than the threshold torque Tth, the steering angle feedback control unit 96 calculates, as the steering angle feedback component Tfbh, the sum of a proportional element, an integral element, and a differential element obtained by using the proportional gain Gph, the integral gain Gih, and the differential gain Gdh, each having a greater value than when the end reaction force Fie is less than or equal to the threshold torque Tth. That is, when turning of the steered wheels 5 in at least one direction is restricted, the steering angle feedback control unit 96 calculates the steering angle feedback component Tfbh such that the steering angle feedback component Tfbh has a greater absolute value than when turning of the steered wheels 5 is not restricted. Note that both the cases where the end reaction force Fie is greater than the threshold torque Tth and where the end reaction force Fie is less than or equal to the threshold torque Tth, each of the proportional gain Gph, the integral gain Gih, and the differential gain Gdh is set to a value greater than zero. The thus calculated steering angle feedback component Tfbh is output to an adder 114.

Then, the target reaction force torque calculation unit 71 calculates, as the target reaction force torque Ts*, a value obtained by adding the steering angle feedback component Tfbh to the torque feedback component Tfbt in the adder 114.

The advantageous effects of the present embodiment will be described below.

(1) The target reaction force torque calculation unit 71 calculates, as the target reaction force torque Ts*, a value obtained by adding the steering angle feedback component Tfbh to the torque feedback component Tfbt. Therefore, a steering reaction force is applied to the steering wheel 3 such that the steering angle θh becomes equal to the target steering angle θh*. Moreover, when turning of the steered wheels 5 in at least one direction is restricted and the end reaction force Fie is contained in the reaction force component Fir on which the target steering angle θh* is based, the steering angle θh corresponding to the steered angle of the steered wheels 5 restricted by the end reaction force Fie is set as the target steering angle θh*. Moreover, in the present embodiment, when turning of the steered wheels 5 in at least one direction is restricted, the torque feedback component Tfbt has a smaller absolute value than when turning of the steered wheels 5 is not restricted, so that the contribution of the torque feedback component Tfbt to the target reaction force torque Ts* is reduced. In other words, when turning of the steered wheels 5 in at least one direction is restricted, the steering angle feedback component Tfbh forms a dominant proportion of the target reaction force torque Ts*, compared to when turning of the steered wheels 5 is not restricted. Accordingly, it is possible to apply an appropriate steering reaction force when turning of the steered wheels 5 in at least one direction is restricted.

(2) When turning of the steered wheels 5 in at least one direction is restricted, the target steering torque calculation unit 92 makes the target steering torque Th* greater or smaller than when turning of the steered wheels 5 is not restricted. Therefore, the steering feeling can be optimized.

(3) When turning of the steered wheels 5 in at least one direction is restricted, the steering angle feedback control unit 96 makes the absolute value of the steering angle feedback component Tfbh greater than when turning of the steered wheels 5 is not restricted. It is therefore possible to apply a more appropriate steering reaction force.

Hereinafter, a steering control device according to a second embodiment will be described with reference to the drawings. Elements identical to those in the first embodiment bear the same reference numerals and are not further described.

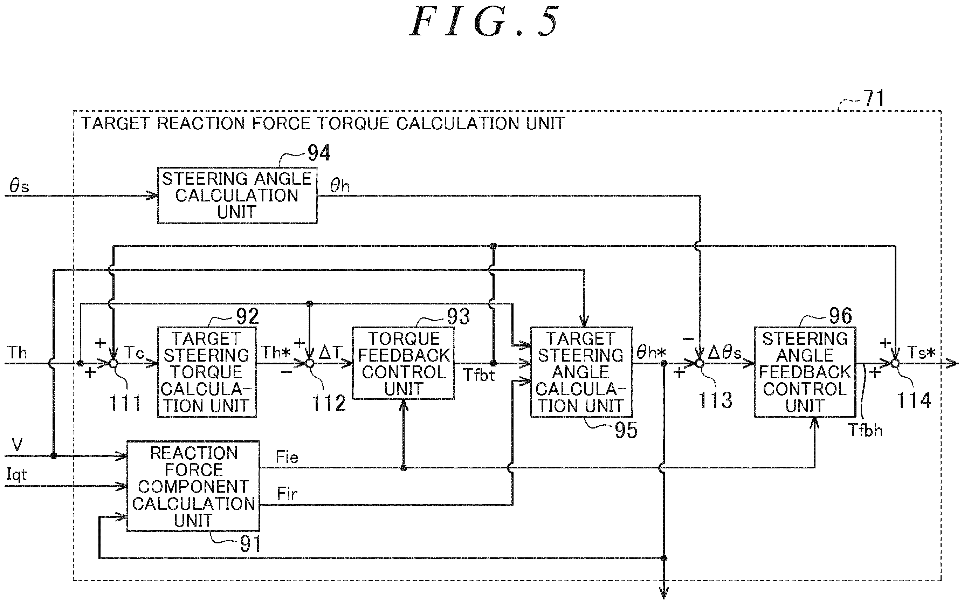

As illustrated in FIG. 5, a target steering torque calculation unit 92 of a target reaction force torque calculation unit 71 of the present embodiment receives only the drive torque Tc, and does not receive the end reaction force Fie. Thus, the target steering torque calculation unit 92 calculates the target steering torque Th* having an absolute value that increases as the absolute value of the drive torque Tc increases, but does not change the target steering torque Th* in accordance with the magnitude of the end reaction force Fie.

The torque feedback control unit 93 calculates, as the torque feedback component Tfbt, the sum of the output values of a proportional element obtained by multiplying the torque deviation ΔT by a proportional gain Gpt, an integral element obtained by multiplying the torque deviation ΔT by an integral gain Git, and a differential element obtained by multiplying the torque deviation ΔT by a differential gain Gdt. Then, when the end reaction force Fie is greater than the threshold torque Tth, the target steering torque calculation unit 92 of the present embodiment set each of the values of the proportional gain Gpt, the integral gain Git, and the differential gain Gdt to zero. That is, when turning of the steered wheels 5 in at least one direction is restricted, the torque feedback control unit 93 sets the torque feedback component Tfbt to zero.

The following describes the effect of the present embodiment. The present embodiment provides the following effect in addition to the effects (1) and (3) of the first embodiment.

(4) When turning of the steered wheels 5 in at least one direction is restricted, the torque feedback control unit 93 sets the torque feedback component Tfbt to zero. Accordingly, the target reaction force torque Ts* becomes equal to the steering angle feedback component Tfbh. It is therefore possible to apply a more appropriate steering reaction force.

Hereinafter, a steering control device according to a third embodiment will be described with reference to the drawings. Elements identical to those in the first embodiment bear the same reference numerals and are not further described.

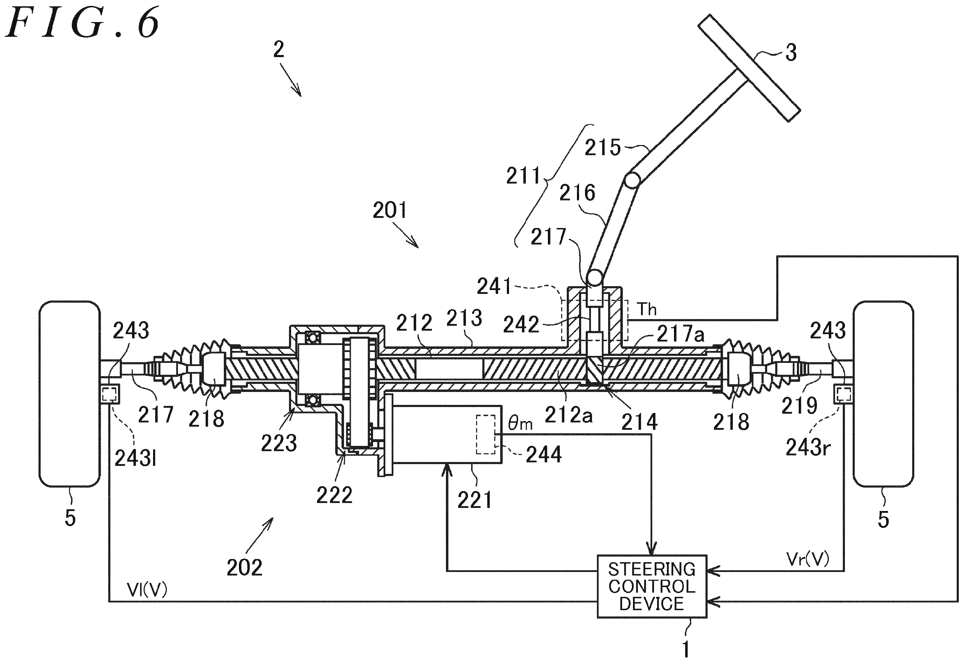

As illustrated in FIG. 6, a steering system 2 of the present embodiment is configured as an electric power steering system (EPS). The steering system 2 includes a steering mechanism 201 that turns steered wheels 5 in accordance with a driver's operation of a steering wheel 3, and an assist mechanism 202 that applies an assist torque (assist force) for assisting a steering operation to the steering mechanism 201.

The steering mechanism 201 includes a steering shaft 211 to which the steering wheel 3 is fixed. The steering mechanism 201 further includes a rack shaft 212 serving as a steered shaft coupled to the steering shaft 211, a rack housing 213 in which the rack shaft 212 is inserted so as to be reciprocally movable, and a rack-and-pinion mechanism 214 that converts a rotation of the steering shaft 211 into a reciprocating motion of the rack shaft 212. The steering shaft 211 includes a column shaft 215, an intermediate shaft 216, and a pinion shaft 217 connected in this order from the side on which the steering wheel 3 is located.

The rack shaft 212 and the pinion shaft 217 are arranged at a prescribed crossing angle relative to each other in the rack housing 213. Rack teeth 212a formed on the rack shaft 212 and pinion teeth 217a formed on the pinion shaft 217 mesh with each other, thereby forming the rack-and-pinion mechanism 214. A tie rod 219 is rotatably coupled to each end of the rack shaft 212 via a rack end 218 including a ball joint at the shaft end portion. A distal end of the tie rod 219 is coupled to a knuckle (not illustrated) to which the steered wheel 5 is attached. Accordingly, in the steering system 2, a rotation of the steering shaft 211 in accordance with a steering operation is converted into an axial movement of the rack shaft 212 by the rack-and-pinion mechanism 214. The axial movement is transmitted to the knuckles via the tie rods 219, so that a steered angle of the steered wheels 5, that is, the direction of travel of the vehicle is changed.

The assist mechanism 202 includes a motor 221 serving as a drive source, a transmission mechanism 222 that transmits a rotation of the motor 221, and a conversion mechanism 223 that converts the rotation transmitted through the transmission mechanism 222 into a reciprocating motion of the rack shaft 212. The assist mechanism 202 causes the transmission mechanism 222 to transmit a rotation of the motor 221 to the conversion mechanism 223, and causes the conversion mechanism 223 to convert the rotation into a reciprocating motion of the rack shaft 212, thereby applying an assist torque to the steering mechanism 201. The motor 221 of the present embodiment is, for example, a three-phase brushless motor; the transmission mechanism 222 is, for example, a belt mechanism; and the conversion mechanism 223 is, for example, a ball screw mechanism.

A torque sensor 241 that detects a steering torque Th applied to the steering shaft 211 by a driver's steering operation is connected to the steering control device 1. The torque sensor 241 is disposed on the pinion shaft 217, and detects the steering torque Th based on a torsion amount of a torsion bar 242. A right front wheel sensor 243r and a left front wheel sensor 2431 provided on a hub unit 243 rotatably supporting the steered wheels 5 via a drive shaft (not illustrated) are connected to the steering control device 1. The right front wheel sensor 243r and the left front wheel sensor 2431 detect wheel speeds Vr and Vl of the respective steered wheels 5. The steering control device 1 of the present embodiment detects an average value of the wheel speeds Vr and Vl as a vehicle speed V. A rotation sensor 244 is also connected to the steering control device 1. The rotation sensor 244 detects a motor angle θm of the motor 221 as a relative angle within 360°. The detected steering torque Th and motor angle θm take a positive value when steering is performed in a first direction (right in the present embodiment), and take a negative value when steering is performed in a second direction (left in the present embodiment). The steering control device 1 supplies drive power to the motor 221 based on the state quantities input from the sensors, thereby controlling the operation of the assist mechanism 202, that is, an assist torque to be applied to the steering mechanism 201 so as to reciprocate the rack shaft 212.

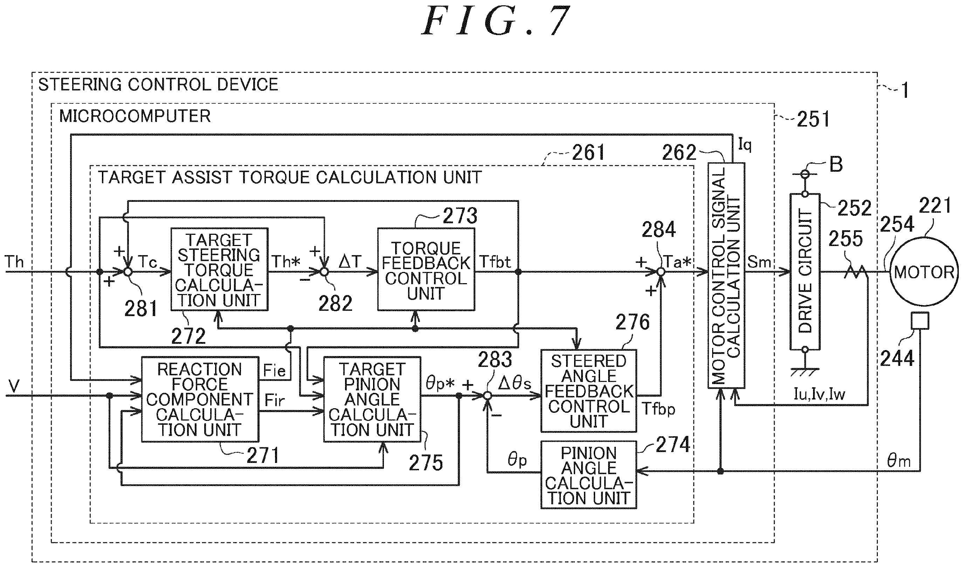

In the following, the configuration of the steering control device 1 will be described. As illustrated in FIG. 7, the steering control device 1 includes a microcomputer 251 that outputs a motor control signal Sm, and a drive circuit 252 that supplies drive power to the motor 221 based on the motor control signal Sm. The drive circuit 252 of the present embodiment is a known PWM inverter including a plurality of switching elements (such as FETs). The motor control signal Sm output by the microcomputer 251 is a signal that determines the ON/OFF state of each switching element. Each switching element is turned ON or OFF in response to the motor control signal Sm, so that the energization pattern to a motor coil of each phase is changed. As a result, a direct current of an in-vehicle battery B is converted into three-phase drive power. The three-phase drive power is output to the motor 221.

The microcomputer 251 receives the vehicle speed V, the steering torque Th, and the motor angle θm described above. The microcomputer 251 also receives phase current values Iu, Iv, and Iw of the motor 221 detected by current sensors 255 disposed on connection lines 254 between the drive circuit 252 and the motor coils of respective phases. In FIG. 7, the connection lines 254 of the respective phases and the current sensors 255 of the respective phases are collectively depicted as a single connection line 254 and a single current sensor 255, respectively, for the sake of convenience. Then, the microcomputer 251 outputs the motor control signal Sm based on these state quantities.

Specifically, the microcomputer 251 includes a target assist torque calculation unit 261 that calculates a target assist torque Ta*, and a motor control signal calculation unit 262 that calculates the motor control signal Sm.

The target assist torque calculation unit 261 calculates the target assist torque Ta* corresponding to the assist torque to be applied by the steering mechanism 201 as will be described below. The motor control signal calculation unit 262 calculates target current values Id* and Iq* as target values of drive currents to be supplied to the motor 221, based on the target assist torque Ta*. The motor control signal calculation unit 262 calculates the q-axis target current value Iq* having an absolute value that increases as the absolute value of the target assist torque Ta* increases. The d-axis target current value Id* is basically zero. Then, the motor control signal calculation unit 262 generates the motor control signal Sm, by performing current feedback control in the dq coordinate system based on the target current values Id* and Iq*, the phase current values Iu, Iv, and Iw, and the motor angle θm of the motor 221, in the same manner as in the first embodiment. Note that a q-axis current value Iq calculated in the course of generating the motor control signal Sm is output to the target assist torque calculation unit 261.

The thus calculated motor control signal Sm is output to the drive circuit 252. In response, drive power corresponding to the motor control signal Sm is supplied from the drive circuit 252 to the motor 221. Then, the motor 221 applies an assist torque based on the target assist torque Ta* to the steering mechanism 201.

In the following, the target assist torque calculation unit 261 will be described.

The target assist torque calculation unit 261 includes a reaction force component calculation unit 271 that calculates a reaction force component Fir as a force against rotation of the steering wheel 3. The target assist torque calculation unit 261 further includes a target steering torque calculation unit 272 that calculates a target steering torque Th* as the target value of the steering torque Th to be input to the steering unit 4, and a torque feedback control unit 273 that calculates a torque feedback component Tfbt by performing a torque feedback calculation. The target assist torque calculation unit 261 further includes a pinion angle calculation unit 274 that calculates a pinion angle θp (turning corresponding angle) of the pinion shaft 217 serving as a rotary shaft that can be converted into the steered angle of the steered wheels 5, and a target pinion angle calculation unit 275 serving as a target turning corresponding angle calculation unit that calculates a target pinion angle θp* (target turning corresponding angle) as a target value of the pinion angle θp. The target assist torque calculation unit 261 further includes a steered angle feedback control unit 276 that calculates a steered angle feedback component Tfbp by performing a steered angle feedback calculation.

The reaction force component calculation unit 271 receives the vehicle speed V, the target pinion angle θp*, and the q-axis current value Iq of the motor 221. The reaction force component calculation unit 271 calculates a current axial force Fer in the same manner as the current axial force calculation unit 103 of the first embodiment, except that the q-axis current value Iq of the motor 221 is used in place of the q-axis current value Iqt of the turning-side motor 44 of the first embodiment. Further, the reaction force component calculation unit 271 calculates an angle axial force Fib in the same manner as the angle axial force calculation unit 104 of the first embodiment, except that the target pinion angle θp* is used in place of the target steering angle θh*. Then, the reaction force component calculation unit 271 calculates an allocation axial force Fd, based on the current axial force Fer, the angle axial force Fib, and the vehicle speed V, in the same manner as in the first embodiment.

Further, the reaction force component calculation unit 271 calculates an end reaction force Fie in the same manner as the end reaction force calculation unit 102 of the first embodiment, except that the target pinion angle θp* is used in place of the target steering angle θh*. Then, the reaction force component calculation unit 271 calculates the reaction force component Fir based on the allocation axial force Fd and the end reaction force Fie, in the same manner as in the first embodiment. The thus calculated reaction force component Fir is output to the target pinion angle calculation unit 275. The end reaction force Fie is output to the target steering torque calculation unit 272, the torque feedback control unit 273, and the steered angle feedback control unit 276.

The target steering torque calculation unit 272 receives a drive torque Tc obtained by adding the torque feedback component Tfbt to the steering torque Th in an adder 281, and the end reaction force Fie. The target steering torque calculation unit 272 calculates the target steering torque Th*, based on the drive torque Tc and the end reaction force Fie, in the same manner as in the first embodiment. The torque feedback control unit 273 receives a torque deviation ΔT calculated by subtracting the target steering torque Th* from the steering torque Th in a subtractor 282 and the end reaction force Fie. Then, the torque feedback control unit 273 calculates the torque feedback component Tfbt, based on the torque deviation ΔT and the end reaction force Fie, in the same manner as in the first embodiment. The thus calculated torque feedback component Tfbt is output to the adders 281 and 284 and the target pinion angle calculation unit 275.

The pinion angle calculation unit 274 receives the motor angle θm. The pinion angle calculation unit 274 calculates the pinion angle θp indicating the rotation angle of the pinion shaft 217, based on the motor angle θm. Specifically, the pinion angle calculation unit 274 integrates (counts) the number of rotations of the motor 221 on the premise that the pinion angle θp is at the origin (zero degree) when the rack shaft 212 is located at a neutral position for the vehicle to travel straight ahead, and calculates the pinion angle θp in terms of an absolute angle, based on the number of rotations and the motor angle θm. The thus calculated pinion angle θp is output to a subtractor 283.

The target pinion angle calculation unit 275 receives the steering torque Th, the torque feedback component Tfbt, the reaction force component Fir, and the vehicle speed V. Similar to the target steering angle calculation unit 95 of the first embodiment, the target steering angle calculation unit 95 of the present embodiment calculates the target pinion angle θp* based on these state quantities, using a model (steering model) formula.

The steered angle feedback control unit 276 receives an angle deviation Δθp calculated by subtracting the pinion angle θp from the target pinion angle θp* in the subtractor 283. Then, the steered angle feedback control unit 276 calculates the steered angle feedback component Tfbp as a control amount for making the pinion angle θp follow the target pinion angle θp* (for performing feedback control), based on the angle deviation Δθp.

Specifically, the steered angle feedback control unit 276 calculates, as the steered angle feedback component Tfbp, the sum of the output values of a proportional element obtained by multiplying the angle deviation Δθp by a proportional gain Gpp, an integral element obtained by multiplying the angle deviation Δθp by an integral gain Gip, and a differential element obtained by multiplying the angle deviation Δθp by a differential gain Gdp. When the end reaction force Fie is greater than the threshold torque Tth, the steered angle feedback control unit 276 calculates, as the steered angle feedback component Tfbp, the sum of a proportional element, an integral element, and a differential element obtained by using the proportional gain Gpp, the integral gain Gip, and the differential gain Gdp, each having a greater value than when the end reaction force Fie is less than or equal to the threshold torque Tth. That is, when turning of the steered wheels 5 in at least one direction is restricted, the steered angle feedback control unit 276 calculates the steered angle feedback component Tfbp such that the steered angle feedback component Tfbp has a greater absolute value than when turning of the steered wheels 5 is not restricted. Note that both the cases where the end reaction force Fie is greater than the threshold torque Tth and where the end reaction force Fie is less than or equal to the threshold torque Tth, each of the proportional gain Gpp, the integral gain Gip, and the differential gain Gdp is set to a value greater than zero. The thus calculated steered angle feedback component Tfbp is output to an adder 284.

Then, the target assist torque calculation unit 261 calculates, as the target assist torque Ta*, a value obtained by adding the steered angle feedback component Tfbp to the torque feedback component Tfbt in the adder 284.

The advantageous effects of the present embodiment will be described below.

(5) The target assist torque calculation unit 261 calculates, as the target assist torque Ta*, a value obtained by adding the steered angle feedback component Tfbp to the torque feedback component Tfbt. Therefore, an assist torque is applied such that the steered angle of the steered wheels 5 has an angle corresponding to the target pinion angle θp*. Further, when turning of the steered wheels 5 in at least one direction is restricted and the end reaction force Fie is contained in the reaction force component Fir on which the target pinion angle θp* is based, the pinion angle θp corresponding to the steered angle of the steered wheels 5 restricted by the end reaction force Fie is set as the target pinion angle θp*. Therefore, if further steering is performed when turning of the steered wheels 5 in at least one direction is restricted, the assist torque is applied as a negative component that prevents steering, that is, a steering reaction force.

Moreover, in the present embodiment, when turning of the steered wheels 5 in at least one direction is restricted, the torque feedback component Tfbt has a smaller absolute value than when turning of the steered wheels 5 is not restricted, so that the contribution of the torque feedback component Tfbt to the target assist torque Ta* is reduced. In other words, when turning of the steered wheels 5 in at least one direction is restricted, the steered angle feedback component Tfbp forms a dominant proportion of the target assist torque Ta*, compared to when turning of the steered wheels 5 is not restricted. Accordingly, it is possible to apply an appropriate steering reaction force when turning of the steered wheels 5 in at least one direction is restricted.

(6) When turning of the steered wheels 5 in at least one direction is restricted, the target steering torque calculation unit 272 makes the target steering torque Th* greater or smaller than when turning of the steered wheels 5 is not restricted. Therefore, the steering feeling can be optimized.

(7) When turning of the steered wheels 5 in at least one direction is restricted, the steered angle feedback control unit 276 makes the absolute value of the steered angle feedback component Tfbp greater than when turning of the steered wheels 5 is not restricted. It is therefore possible to apply a more appropriate steering reaction force.

The above embodiments may be modified as described below. The embodiments and the following modifications may be combined as long as no technical inconsistency arises. In the second embodiment, when the end reaction force Fie exceeds the threshold torque Tth, the torque feedback component Tfbt may be set to zero.

In the first and second embodiments, when the end reaction force Fie exceeds the threshold torque Tth, the absolute value of the steering angle feedback component Tfbh is increased. However, the present invention is not limited thereto. The absolute value of the steering angle feedback component Tfbh does not have to be changed in accordance with the end reaction force Fie. Similarly, in the third embodiment, the absolute value of the steered angle feedback component Tfbp does not have to be changed in accordance with the end reaction force Fie.

In the first and third embodiments, when the end reaction force Fie exceeds the threshold torque Tth, the absolute value of the target steering torque Th* is increased or reduced. However, the present invention is not limited thereto. The absolute value of the target steering torque Th* does not have to be changed in accordance with the end reaction force Fie.

In the first and second embodiments, a value obtained by adding the steering angle feedback component Tfbh to the torque feedback component Tfbt is calculated as the target reaction force torque Ts*. However, the present invention is not limited thereto. For example, the steering angle feedback component Tfbh may be calculated as the target reaction force torque Ts* without making any changes. Further, in the third embodiment, for example, the steered angle feedback component Tfbp may be calculated as the target assist torque Ta* without making any changes.

In the above embodiments, the end reaction force Fie is used as a restriction reaction force. However, the present invention is not limited thereto. For example, when the steered wheel 5 is turned and brought into contact with an obstacle such as a curb, an obstacle contact reaction force as a reaction force against further steering in a direction toward the obstacle may be used as a restriction reaction force. In this case, a situation where the steered wheel 5 is turned and brought into contact with an obstacle corresponds to a situation where turning of the steered wheels 5 in at least one direction is restricted.

In the above embodiments, the allocation axial force Fd is calculated based on the current axial force Fer and the angle axial force Fib. However, the present invention is not limited thereto. The allocation axial force Fd may be calculated based on other state quantities in addition to or in place of these axial forces. Examples of axial forces based on other state quantities may include an axial force based on a value detected by an axial force sensor that detects the axial force of the rack shafts 32, 212, an axial force based on a tire force detected by the hub units 53, 243, a vehicle state quantity axial force based on a yaw rate and a lateral acceleration.

In the first and second embodiments, the current axial force Fer is calculated based on the q-axis current value Iqt. However, the present invention is not limited thereto. For example, the current axial force Fer may be calculated based on the q-axis target current value Iqt*. Similarly, in the third embodiment, the current axial force Fer may be calculated based on, for example, the q-axis target current value Iq*.

In the first and second embodiments, the angle axial force Fib is calculated based on the target steering angle θh*. However, the present invention is not limited thereto. For example, the angle axial force Fib may be calculated based on the steering angle θh or the pinion angle θp, or may be calculated using other methods, such as methods using other parameters such as the steering torque Th and the vehicle speed V. Similarly, in the third embodiment, the angle axial force Fib may be calculated using other methods.

In the first and second embodiments, the steering angle ratio between the steering angle θh and the pinion angle θp (turning corresponding angle) is constant. However, the present invention is not limited thereto. The steering angle ratio may vary with the vehicle speed or the like. In the first and second embodiments, the rack shaft 32 may be supported by, for example, a bush in place of the first rack-and-pinion mechanism 34.

In the first and second embodiments, the turning-side actuator 43 may be, for example, one in which the turning-side motor 44 is arranged coaxially with the rack shaft 32, or one in which the turning-side motor 44 is arranged parallel to the rack shaft 32.

In the first and second embodiments, the target steering angle calculation unit 95 may calculate the target steering angle θh* without using the vehicle speed V. Similarly, in the third embodiment, the target pinion angle calculation unit 275 may calculate the target pinion angle θp* without using the vehicle speed V.

In the first and second embodiments, the target steering angle calculation unit 95 may calculate the target steering angle θh* using a model formula based on a model that additionally includes a so-called spring term and uses a spring constant K determined by specifications of a suspension and wheel alignment. Similarly, in the third embodiment, the target pinion angle calculation unit 275 may calculate the target pinion angle θp* using a model formula based on a model that additionally includes a so-called spring term.

In the first and second embodiments, the steering system 2 controlled by the steering control device 1 is a link-less steer-by-wire steering system in which power transmission is disconnected between the steering unit 4 and the turning unit 6. However, the present invention is not limited thereto. The steering system 2 may be a steer-by-wire system in which power transmission can be connected and disconnected between the steering unit 4 and the turning unit 6 by a clutch.

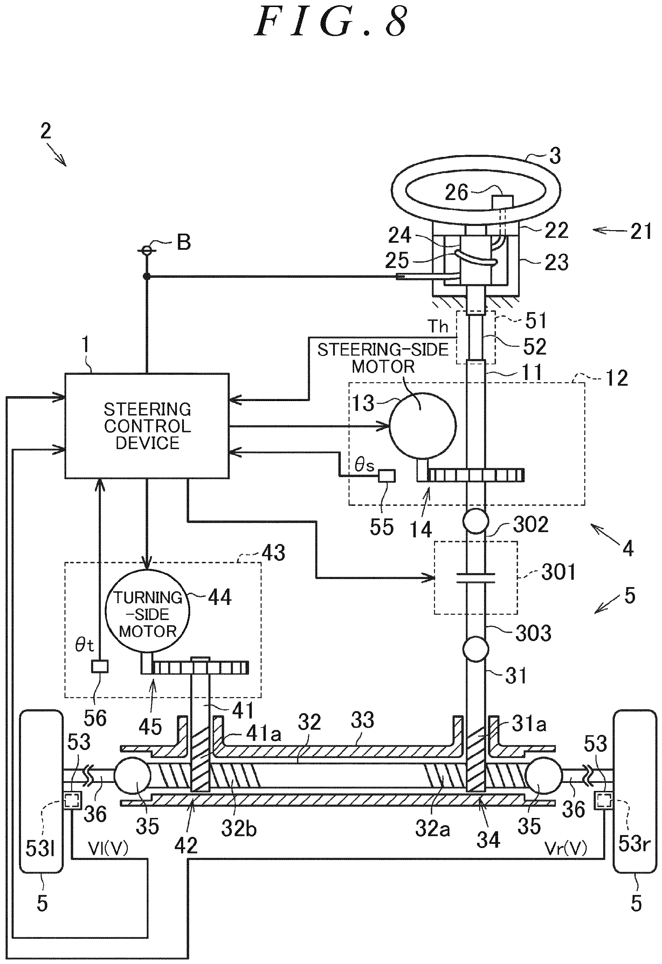

For example, in the example illustrated in FIG. 8, a clutch 301 is disposed between the steering unit 4 and the turning unit 6. The clutch 301 is coupled to the steering shaft 11 through an input-side intermediate shaft 302 fixed to its input-side element, and is coupled to the first pinion shaft 31 through an output-side intermediate shaft 303 fixed to its output-side element. When the clutch 301 is disconnected in response to a control signal from the steering control device 1, the steering system 2 is put into a steer-by-wire mode. Meanwhile, when the clutch 301 is connected, the steering system 2 is put into an electric power steering mode.

**Claims**

1. A steering control device that controls a steering system in which power transmission is disconnected between a steering unit and a turning unit that turns steered wheels in accordance with steering input to the steering unit, the steering control device controlling an operation of a steering-side motor provided in the steering unit, the steering control device comprising:
a target reaction force torque calculation unit that calculates a target reaction force torque as a target value of a steering reaction force, the steering reaction force being a force against the steering input to the steering unit and being generated by the steering-side motor, wherein:

the target reaction force torque calculation unit includes

a target steering torque calculation unit that calculates a target steering torque as a target value of a steering torque to be input to the steering unit,
a torque feedback control unit that calculates a torque feedback component by performing torque feedback control based on the steering torque and the target steering torque,
a reaction force component calculation unit that calculates a reaction force component, the reaction force component being a force applied in a direction opposite to the steering torque,
a target steering angle calculation unit that calculates a target steering angle as a target value of a steering angle of a steering wheel coupled to the steering unit, based on the steering torque, the torque feedback component, and the reaction force component, and
a steering angle feedback control unit that calculates a steering angle feedback component by performing steering angle feedback control based on the steering angle and the target steering angle;

the target reaction force torque calculation unit calculates the target reaction force torque as the target value of the steering reaction force, based on the steering angle feedback component;
the reaction force component calculation unit includes a restriction reaction force calculation unit that calculates, when turning of the steered wheels in at least one direction is restricted, a restriction reaction force for restricting steering for turning the steered wheels in the at least one direction; and
when turning of the steered wheels in at least one direction is restricted, the torque feedback control unit makes an absolute value of the torque feedback component smaller than when turning of the steered wheels is not restricted.

2. The steering control device according to claim 1, wherein when turning of the steered wheels in at least one direction is restricted, the torque feedback control unit sets the torque feedback component to zero.

3. The steering control device according to claim 1, wherein when turning of the steered wheels in at least one direction is restricted, the target steering torque calculation unit makes an absolute value of the target steering torque greater or smaller than when turning of the steered wheels is not restricted.

4. The steering control device according to any one of claims 1 to 3, wherein when turning of the steered wheels in at least one direction is restricted, the steering angle feedback control unit makes an absolute value of the steering angle feedback component greater than when turning of the steered wheels is not restricted.

5. The steering control device according to claim 1, wherein the reaction force component calculation unit includes an axial force calculation unit that calculates an axial force applied from the steered wheels to a steered shaft to which the steered wheels are coupled, and the reaction force component calculation unit calculates the reaction force component, based on the axial force and the restriction reaction force.

6. A steering control device that controls a steering system, the steering system including an assist mechanism having a motor as a drive source to apply an assist torque for assisting a steering operation to a steering mechanism, the steering control device comprising:

a target assist torque calculation unit that calculates a target assist torque as a target value of the assist torque generated by an output torque of the motor, wherein:

the target assist torque calculation unit includes

a target steering torque calculation unit that calculates a target steering torque as a target value of a steering torque to be input to the steering mechanism,

a torque feedback control unit that calculates a torque feedback component by performing torque feedback control based on the steering torque and the target steering torque,

a reaction force component calculation unit that calculates a reaction force component, the reaction force component being a force applied in a direction opposite to the steering torque,

a target turning corresponding angle calculation unit that calculates a target turning corresponding angle as a target value of a turning corresponding angle, the turning corresponding angle being a rotation angle of a rotary shaft that is convertible into a steered angle of steered wheels, based on the steering torque, the torque feedback component, and the reaction force component, and

a steered angle feedback control unit that calculates a steered angle feedback component by performing steered angle feedback control based on the turning corresponding angle and the target turning corresponding angle;

the target assist torque calculation unit calculates the target assist torque based on the steered angle feedback component;

the reaction force component calculation unit includes a restriction reaction force calculation unit that calculates, when turning of the steered wheels in at least one direction is restricted, a restriction reaction force for restricting steering for turning the steered wheels in the at least one direction; and

when turning of the steered wheels in at least one direction is restricted, the torque feedback control unit makes an absolute value of the torque feedback component smaller than when turning of the steered wheels is not restricted.

# FIG.1

*FIG.2*

*FIG. 3*

# *FIG.4*

$FIG.5$

TARGET REACTION FORQE TORQUE CALCULATION UNIT — 71

94 STEERING ANGLE CALCULATION UNIT

92 TARGET STEERING TORQUE CALCULATION UNIT

93 TORQUE FEEDBACK CONTROL UNIT

95 TARGET STEERING ANGLE CALCULATION UNIT

96 STEERING ANGLE FEEDBACK CONTROL UNIT

91 REACTION FORCE COMPONENT CALCULATION UNIT

EP 3 647 161 A1

FIG.6

*FIG. 7*

# FIG. 8

Europäisches
Patentamt

European
Patent Office

Office européen
des brevets

**EUROPEAN SEARCH REPORT**

Application Number

EP 19 20 5939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 219 580 A1 (JTEKT CORP [JP]) 20 September 2017 (2017-09-20) * paragraphs [0023] - [0071]; figures * & JP 2017 165219 A (JTEKT CORP) 21 September 2017 (2017-09-21) ----- | 1,6 | INV. B62D6/00 B62D5/04 |

TECHNICAL FIELDS
SEARCHED      (IPC)

B62D

The present search report has been drawn up for all claims

| Place of search | Date of completion of the search | Examiner |
|---|---|---|
| The Hague | 13 March 2020 | Kulozik, Ehrenfried |

## ANNEX TO THE EUROPEAN SEARCH REPORT
## ON EUROPEAN PATENT APPLICATION NO.

EP 19 20 5939

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2020

| Patent document cited in search report | | Publication date | Patent family member(s) | | Publication date |
|---|---|---|---|---|---|
| EP 3219580 | A1 | 20-09-2017 | CN | 107187493 A | 22-09-2017 |
| | | | EP | 3219580 A1 | 20-09-2017 |
| | | | JP | 2017165219 A | 21-09-2017 |
| | | | US | 2017267276 A1 | 21-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165219 A

- JP 2014000943 A